# EUROPÄISCHE PATENTSCHRIFT

(11) **EP 2 092 026 B1**
(45) Veröffentlichungstag und Bekanntmachung des Hinweises auf die Patenterteilung: **29.02.2012**
(21) Anmeldenummer: 07822372.4
(22) Anmeldetag: 08.11.2007
(51) Int. Cl.: C09D 4/00

(54) **ULTRAHYDROPHOBE BESCHICHTUNGEN**
ULTRAHYDROPHOBIC COATS
REVÊTEMENTS ULTRA-HYDROPHOBES

(30) Priorität: 16.11.2006 DE 102006054158
(43) Veröffentlichungstag der Anmeldung: 26.08.2009
(73) Patentinhaber: Wacker Chemie AG, 81737 München (DE)
(72) Erfinder: MINGE, Oliver, 80337 München (DE); BALL, Peter, 84547 Emmerting (DE); DELICA, Sabine, 81825 München (DE)
(74) Vertreter: Fritz, Helmut
(86) Internationale Anmeldenummer: PCT/EP2007/062068
(87) Internationale Veröffentlichungsnummer: WO 2008/058895

(56) Entgegenhaltungen:
- US-A- 5 426 151
- US-A1- 2003 195 316
- US-A1- 2006 116 495

## Beschreibung

Die vorliegende Erfindung betrifft Polymer-Partikel-Abmischungen, ihre Herstellung und ihre Verwendung.

Ultrahydrophobe Beschichtungen, welche einer Oberfläche selbstreinigende oder "anti-soiling"-Eigenschaften vermitteln, sind eine intensiv untersuchte Thematik und von hohem wirtschaftlichen Wert. Mit der Nichtbenetzbarkeit einer Oberfläche durch Wasser gehen auch eine verringerte Verschmutzungsneigung und ein verringerter Reinigungsaufwand, ein verringerter Befall durch Algen, Pilze oder Mikroorganismen, ein schöneres optisches Erscheinungsbild sowie insgesamt erheblich geringere Wartungskosten einher. Solche Oberflächen besitzen also eine bessere Funktionalität und eine erhöhte Lebensdauer gegenüber konventionellen, wenigstens teilweise benetzbaren Oberflächen.

Durch Wasser schwer benetzbare, also ultrahydrophobe, Oberflächen sind bekannt. In der Natur findet man sie häufig auf Blättern von Pflanzen, die bekannteste von ihnen ist die Lotus-Blume, aber auch der gemeine Kohl oder die Kapuzinerkresse weisen an ihren Blättern solche Oberflächen auf. Das Prinzip dieser Oberflächen wird in der EP 772514 beschrieben: Sie beansprucht eine selbstreinigende Oberfläche, deren Oberflächenstruktur Erhebungen und Vertiefungen aufweist, wobei die Erhebungen zwischen 5 und 100 Mikrometer groß sind und einen Abstand zwischen 5 und 200 Mikrometer aufweisen. Die Erhebungen bestehen dabei aus einem hydrophoben Material. Die EP 772514 beansprucht jedoch keine Unterstrukturierung dieser Erhebungen und Vertiefungen. Dem Fachmann ist mittlerweile bekannt, daß zur Erzielung eines ultrahydrophoben Effektes eine Strukturierung durch Erhebungen und Vertiefungen im Mikrometerbereich ebenso wie eine Nanostrukturierung der einzelnen Erhebungen und Vertiefungen vorliegen muss.

Zur künstlichen Erzeugung solcher Oberflächen sind zwei Ansätze gebräuchlich:
Der erste Ansatz beruht auf der nachträglichen Strukturierung einer zuvor glatten Oberfläche. Dabei kommen Methoden aus der Kunststoffverarbeitung zum Einsatz, insbesondere das Abformen von Masterstrukturen, beispielsweise durch Extrusion, Spritzgießen oder Prägeverfahren. Beispielsweise beschreibt die DE 10210673 unter anderem die Herstellung solcher Oberflächen durch modifizierte Spritzguß-Verfahren.
Auch Verfahren, wie sie aus der Halbleiterbranche bekannt sind, also lithographische Methoden, sind zum Erzeugen ultrahydrophober Oberflächen bekannt. Die erforderliche Strukturierung der Oberflächen erfolgt dabei über Masken, Bestrahlung von Photoresistmaterialien mit hochenergetischem Licht sowie durch Ätzprozesse. Ein Beispiel hierfür ist die DE 10138036. Sie beschreibt die Erzeugung ultrahydrophober Oberflächen durch Photoresistmaterialien und Laserlicht im UV-Bereich.

Der zweite Ansatz beruht auf dem Auftragen von Partikeln auf eine glatte Oberfläche in einer solchen Weise, daß diese Partikel nach Aufbringung eine korrekte, Ultrahydrophobie vermittelnde Oberflächenstruktur ergeben. Dabei bestehen die verwendeten Systeme in der Regel immer aus einem physikalisch oder chemisch verfilmenden Bindemittel und aus Partikeln, wobei die Partikel zusammen mit dem Bindemittel oder nachträglich aufgebracht werden.
Die WO 02/049980 lehrt beispielsweise ein System bestehend aus zumindest zum Teil hydrophobierten Partikeln im Nanometerbereich und einem anorganischen oder organischen Bindemittel.
Die EP 1043380 beschreibt ein System aus fluorierten Partikeln im Nanometerbereich zusammen mit einem fluorierten Polymer als Bindemittel.
Die EP 1153987 beschreibt ein System, das sich zusammensetzt aus einem hydrophoben, porösen Partikel und einem hydrophoben Bindemittel, ausgewählt aus Polyolefinen, welche Polyalkylenoxidgruppen enthalten können.
Die DE 102004062739 beschreibt ein System, bestehend aus hydrophoben Partikeln und einem Bindemittel, wobei als Bindemittel UV-härtende Acrylatlacke zum Einsatz kommen. Auftragung von Bindemittel und Partikel erfolgt dabei in getrennten Arbeitsschritten.
Die WO 02/055446 beschreibt ein System bestehend aus einem Acrylsäure/Ethylen Copolymer und hydrophobierter pyrogener Kieselsäure.
Die DE 10118352 beschreibt ein System bestehend aus einem Acrylat-Copolymer als Bindemittel und hydrophobierter Kieselsäure als Partikel.
Die WO 2004/014575 beschreibt ein System basierend auf einem Pulverlack, welcher zusammen mit dem Partikel durch Pulversprühverfahren aufgebracht werden. Als Partikel werden solche aus hydrophoben Materialien oder eigens hydrophobierte Partikel eingesetzt.
Die EP 1475426 schließlich beschreibt ein System bestehend aus einem Siliconwachs als Bindemittel und hydrophoben Partikeln.

Dabei sind alle Systeme vom Einsatz hydrophober Partikel abhängig, wobei oft noch zusätzlich ein hydrophobes Bindemittel oder eine Nachhydrophobierung vonnöten ist. Hydrophobe Partikel sind mit die teuersten Komponenten des Systems. Sie müssen in der Regel erst aus hydrophilen Partikeln in einem extra Prozeßschritt durch Oberflächenfunktionalisierungsreaktionen erzeugt werden. Dazu werden teure Reagenzien, beispielsweise spezielle organofunktionelle Silane, gebraucht und es fällt in aller Regel Prozeßabfall an. Bereits hydrophobe Materialien auf der anderen Seite, beispielsweise Polyolefinwachse, müssen in aller Regel erst in eine partikelförmige (mikronisierte) Form gebracht werden.

US 2006/116495 A1 beschreibt ein hydrophobes Beschichtungssystem, das ein Organosiliconcopolymer enthält, welches aus ethylenisch ungesättigten Monomeren und ethylenisch ungesättigten Polyorganosiloxanen in wässrigem Medium hergestellt wird.

US-A-5426151 D2 beschreibt die Vernetzung von Polysiloxanen, welche epoxy-, hydroxy- oder carboxyfunktionelle Gruppen tragen. In Anwesenheit dieser Polysiloxane werden radikalisch polymerisierbare Monomere polymerisiert. Die Polysiloxane reagieren nicht mit den radikalisch polymerisierbaren Monomeren.

Gegenstand der Erfindung ist ein Verfahren zur Herstellung von Beschichtungssystemen, bei dem ein Organosiliconcopolymer (O), hergestellt wird durch radikalische Polymerisation mittels Methoden der freien radikalischen Polymerisation in Substanz, in organischer Lösung oder in organischer Dispersion von
A) ethylenisch ungesättigten Monomeren, die ausgewählt werden aus (Meth)acrylsäureestern, Vinylestern, Vinylaromaten, Olefinen, 1,3-Dienen und Vinylethern und
B) einfach oder mehrfach ethylenisch ungesättigten Polyorganosiloxanen und
C) gegebenenfalls ethylenisch ungesättigten Hilfsmonomeren, die ausgewählt werden aus ethylenisch ungesättigten Mono- und Dicarbonsäuren; Mono- und Diestern der Fumarsäure und Maleinsäure, Maleinsäureanhydrid, ethylenisch ungesättigten Carbonsäureamiden und -nitrilen; ethylenisch ungesättigten Sulfonsäuren und deren Salzen, ethylenisch ungesättigten Monomeren mit Hydroxy- oder CO-Gruppen,
und Partikel (P) in eine Lösung oder Dispersion des Organosiliconcopolymen (O) eingearbeitet werden.

Es wurde überraschend gefunden, daß auch ausschließlich hydrophile Partikel (P) ausreichen, um eine sehr ausgeprägte ultrahydrophobe Oberfläche zu erzeugen, wenn gleichzeitig als Bindemittel das spezielle Organosiliconcopolymer (O) eingesetzt wird.
Das Organosiliconcopolymer (O) kann dabei durch radikalische Copolymerisation von Standardbausteinen der Polymerchemie, etwa Acrylaten und Styrolen zusammen mit ethylenisch ungesättigten Polyorganosiloxanen B) erhalten werden. Die Polyorganosiloxane B) können dabei überraschenderweise nur einen sehr untergeordneten Anteil am gesamten Organosiliconcopolymer (O) ausmachen.

Das Beschichtungssystem aus (O) und (P) kann in Form eines Pulverlackes, in organischer Lösung oder in wäßriger Dispersion vorliegen, wobei im Fall des Vorliegens in wäßriger Dispersion das Polymer idealerweise selbstdispergierbar ist und auf den Einsatz externer Dispergierhilfsmittel verzichtet werden kann.

Bevorzugte Monomere A) aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, n-Butylmethacrylat, iso-Butylacrylat, t-Butylacrylat, 2-Ethylhexylacrylat, und Norbornylacrylat.
Bevorzugte ethylenisch ungesättigte Monomere A) aus der Gruppe derVinylester sind solche mit Carbonsäureresten mit 1 bis 15 C-Atomen. Besonders bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9® oder VeoVa10® (Firma Resolution). Besonders bevorzugt ist Vinylacetat.

Als Vinylaromaten A) bevorzugt sind Styrol, alpha-Methylstyrol, die isomeren Vinyltoluole und Vinylxylole sowie Divinylbenzole. Besonders bevorzugt ist Styrol.
Ein bevorzugter Vinylether A) ist beispielsweise Methylvinylether.

Die bevorzugten Olefine A) sind Ethen, Propen, 1-Alkylethene sowie mehrfach ungesättigte Alkene, und die bevorzugten Diene sind 1,3-Butadien und Isopren. Besonders bevorzugt sind Ethen und 1,3-Butadien.
Besonders bevorzugt werden als Monomere A) ein oder mehrere Monomere aus der Gruppe Vinylacetat, Vinylester von α-verzweigten Monocarbonsäuren mit 9 bis 11C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien. Besonders bevorzugt werden als Monomere A) auch Gemische von n-Butylacrylat und 2-Ethylhexylacrylat und/oder Methylmethacrylat; Gemische von Styrol und einem oder mehreren Monomeren aus der Gruppe Methylacrylat, Ethylacrylat, Propylacrylat, n-Butylacrylat, 2-Ethylhexylacrylat; Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; Gemische von 1,3-Butadien und Styrol und/oder Methylmethacrylat.

Bevorzugte einfach oder mehrfach ethylenisch ungesättigte Polyorganosiloxane B) weisen die allgemeine Formel [1]

(SiO_{4/2})ₖ(R¹SiO_{3/2})ₘ(R¹₂SiO_{2/2})ₚ(R¹₃SiO_{1/2})_{q} [O_{1/2}SiR³₂-L-X]ₛ[O_{1/2}H]ₜ [1]

auf, wobei
- **L**: einen bivalenten gegebenenfalls substituierten aromatischen, heteroaromatischen oder aliphatischen Rest (CR⁴₂)_{b},
- **R¹, R³, R⁴**: ein Wasserstoffatom öder einen monovalenten gegebenenfalls mit -CN, -NCO, -NR²₂, -COOH, -COOR², -PO(OR²)₂, -Halogen, -Acryl, -Epoxy, -SH, -OH oder -CONR²₂ substituierten C₁-C₂₀-Kohlenwasserstoffrest oder C₁-C₂₀-Kohlenwasserstoffoxyrest, in dem jeweils eine oder mehrere, einander nicht benachbarte Methyleneinheiten durch Gruppen -O-, -CO-, -COO-, -OCO-, oder -OCOO-, -S-, oder -NR²-ersetzt sein können und in denen eine oder mehrere, einander nicht benachbarte Methineinheiten durch Gruppen, -N=,-N=N-,oder -P= ersetzt sein können,
- **X**: einen ethylenisch ungesättigten Rest,
- **R²**: Wasserstoff oder einen monovalenten gegebenenfalls substituierten Kohlenwasserstoffrest,
- **b**: 0 oder ganzzahlige Werte,
- **s**: ganzzahlige Werte von mindestens 1,
- **t**: 0 oder ganzzahlige Werte,
- **k + m + p + q**: ganzzahlige Werte von mindestens 2 bedeuten.

Bevorzugte Polyorganosiloxane B) sind solche, deren C₁-C₂₀-Kohlenwasserstoffreste und C₁-C₂₀-Kohlenwasserstoffoxyreste **R¹, R³, R⁴** aliphatisch gesättigt oder ungesättigt, aromatisch, geradkettig oder verzweigt sein können. **R¹, R³, R⁴** weisen vorzugsweise 1 bis 12 Atome, insbesondere 1 bis 6 Atome, vorzugsweise nur Kohlenstoffatome, oder ein Alkoxysauerstoffatom und sonst nur Wasserstoffatome auf. Vorzugsweise sind **R¹, R³, R⁴** geradkettige oder verzweigte C₁-C₆-Alkylreste oder Phenylreste. Besonders bevorzugt sind die Reste Methyl, Ethyl, Phenyl und Vinyl.
Bevorzugt ist **R³** ein Methylrest und **R⁴** Wasserstoff.
**X** bedeutet vorzugsweise einen ethylenisch ungesättigten Rest vom Vinyl- (-C₂H₃), Acryl- (-OCOC₂H₃) oder Methacryltyp (-OCOC₂H₂CH₃).
Vorzugsweise weist **b** Werte von höchstens 50, insbesondere höchstens 10 auf. In besonders bevorzugten Ausführungsformen ist **b** gleich 0, 1, 2 oder 3.
Das Polyorganosiloxan B) der allgemeinen Formel [1] kann linear, cyclisch, verzweigt oder vernetzt sein. Die Summe von **k, m, p, q, s** und **t** ist vorzugsweise eine Zahl von 3 bis 20000, insbesondere 8 bis 1000.

Eine bevorzugte Variante für ein Polyorganosiloxan B) der allgemeinen Formel [1] ist ein lineares Polyorganosiloxan, das ausschließlich oder nahezu ausschließlich aus R₂SiO_{2/2}-Einheiten besteht; dabei gilt, daß sich das Silicon fast ausschließlich aus difunktionellen Einheiten **p** zusammensetzt. Bevorzugt beträgt der Anteil von **p,** bezogen auf die Summe von **k, m, p, q** wenigstens 95%, besonders bevorzugt ist der Anteil von **p** > 95%. Im diesem Fall ist die Zahl der ethylenisch ungesättigten Gruppen pro Molekül bevorzugt eins oder zwei. Ganz besonders bevorzugt sind α,ω-Divinylpolydimethylsiloxane sowie α-Methacryloxymethylpolydimethylsiloxane und α,ω-Bis(Methacryloxymethyl)polydimethylsiloxane. Insbesondere bedeuten **k** und **m** den Wert 0 und **q** den Wert 0 oder 1.

Eine weitere bevorzugte Variante für ein Polyorganosiloxan B) der allgemeinen Formel [1] ist ein Organosiliconharz. Dieses kann aus mehreren Einheiten bestehen, wie in der allgemeinen Formel [1] beschrieben ist, wobei die Molprozente der enthaltenen Einheiten durch die Indizes **k, m, p, q** bezeichnet werden. **k** + **m** muß dabei > 0 sein. Bevorzugt werden hierbei Polysiloxanharze B) eingesetzt, bei denen **k + m** > 50 %, bezogen auf die Summe von **k, m, p, q** ist. Besonders bevorzugt sind Harze, für die **k + m** > 90% ist.

Eine weitere bevorzugte Variante für ein Polyorganosiloxan B) der allgemeinen Formel [1] ist ein Organosiliconharz, das ausschließlich oder nahezu ausschließlich aus SiO_{4/2}-Einheiten besteht; dabei gilt, daß **k** größer als **m + p + q** ist. Bevorzugt beträgt der Anteil von **k,** bezogen auf die Summe von **k, m, p, q** wenigstens 51%, besonders bevorzugt ist der Anteil von **k** > 95% oder von 55 bis 65%.

Gegebenenfalls können noch jeweils 0,1 bis 20 Gew-%, bezogen auf das Gesamtgewicht der Monomere A), ethylenisch ungesättigte Hilfsmonomere C) copolymerisiert werden. Bevorzugt werden pro Vertreter eines Hilfsmonomeren C) 0,5 bis 2,5 Gew-% eingesetzt. Insgesamt kann die Summe aller Hilfsmonomere C) bis zu 20 Gew-% der Monomermischung aus A), B) und C) ausmachen, bevorzugt sind es in Summe weniger als 10 Gew-% Hilfsmonomere C). Beispiele für Hilfsmonomere C) sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle ethylenisch ungesättigte Comonomere wie Glycidylmethacrylat und Glycidylacrylat. Genannt seien auch ethylenisch ungesättigte Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat. Weiterhin seien copolymerisierbare ethylenisch ungesättigte Silane genannt, etwa Vinylsilane wie Vinyltrimethoxysilan oder Vinyltriethoxysilan oder (Meth)acrylsilane, beispielsweise die von der Firma Wacker-Chemie AG, München, Deutschland vertriebenen Silane GENIOSIL® GF-31
(Methacryloxypropyltrimethoxysilan), XL-33
(Methacryloxymethyltrimethoxysilan), XL-32
(Methacryloxymethyldimethylmethoxysilan), XL-34
(Methacryloxymethylmethyldimethoxysilan) und XL-36
(Methacryloxymethyltriethoxysilan).

Die Monomerauswahl A) bzw. die Auswahl der Gewichtsanteile der Monomere A), B) und der Comonomere C) erfolgt dabei vorzugsweise so, daß im allgemeinen eine Glasübergangstemperatur Tg von ≤ 60°C, vorzugsweise -50°C bis +60°C resultiert. Die Glasübergangstemperatur Tg der Organosiliconcopolymere (O) kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956*)* gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.
Bezogen auf 100 Gewichtsteile der ethylenisch ungesättigten Monomeren A), B) und C) werden vorzugsweise mindestens 50 Gewichtsteile Monomere A), besonders bevorzugt wenigstens 65 Gewichtsteile eingesetzt. An Monomeren B) werden vorzugsweise 1 bis 50 Gewichtsteile eingesetzt, besonders bevorzugt bis zu 30 Gewichtsteile, insbesondere höchstens 25 Gewichtsteile. An Monomeren C) werden bevorzugt bis zu 20 Gewichtsteile eingesetzt, besonders bevorzugt höchstens 10 Gewichtsteile.

Die Herstellung der Organosiliconcopolymere (O) erfolgt mittels Methoden der freien radikalischen Polymerisation und kann in Substanz, in organischer Lösung oder in organischer Dispersion stattfinden, wie es dem Fachmann geläufig ist. Bevorzugt ist eine Polymerisation in organischer Lösung, ganz besonders bevorzugt ist eine Polymerisation in einem wenigstens zum Teil mit Wasser mischbaren Lösemittel oder Lösemittelgemisch, beispielsweise Isopropanol, Isopropanol/Ethylacetat-Gemische, Methoxypropylacetat/Isopropanol-Gemische.
Das Polymerisationsmedium ist dabei idealerweise gleichzeitig das Medium in dem das System aus (O) und (P) anschließend hergestellt oder eingesetzt wird. Es ist jedoch auch ein Austausch von Lösemitteln möglich, insbesondere ein Überführen von Substanzpolymerisaten in organische Lösungen oder ein Austausch von organischem Lösemittel durch ein wässriges Medium ist bevorzugt.

Die Reaktionstemperaturen betragen 0°C bis 150°C, bevorzugt 20°C bis 130°C, besonders bevorzugt 30°C bis 120°C. Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente. Besonders bevorzugt ist eine Polymerisation, bei der die Silikonbausteine vorgelegt und die übrigen reaktiven Bestandteile der Polymerisation zudosiert werden.

Die Initiierung der Polymerisation erfolgt mittels der üblichen Initiatoren oder Redox-Initiator-Kombinationen. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, t-Butylperoxobenzoat, Isopropylbenzolmonohydroperoxid und Azobisisobutyronitril. Die genannten Initiatoren werden vorzugsweise in Mengen von 0,01 bis 4,0 Gew-%, bezogen auf das Gesamtgewicht der Comonomeren A), B) und C) eingesetzt. Als Redox-Initiator-Kombinationen verwendet man oben genannte Initiatoren in Verbindung mit einem Reduktionsmittel. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt vorzugsweise 0,15 bis 3 Gew.-% der eingesetzten Comonomeren A), B) und C). Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Besonders bevorzugte Initiatoren sind t-Butylperoxopivalat, und t-Butylperoxobenzoat, sowie die Peroxid/Reduktionsmittelkombinationen Ammoniumpersulfat/Natriumhydroxymethansulfinat und Kaliumpersulfat/Natriumhydroxymethansulfinat. Eine Übersicht über weitere geeignete Initiatoren zusätzlich zu den eben beschriebenen Vertretern findet sich im "Handbook of Free Radical Initiators", E.T. Denisov, T.G. Denisova, T.S. Pokidova, 2003, Wiley Verlag

Bevorzugte Partikel (P) werden ausgewählt aus hydrophilen Silicium- und Metalloxiden **MO.** Die Partikel (P) zeichnen sich dadurch aus, dass sie auf ihrer Oberfläche über M-OH- oder M-O-M-Funktionen verfügen, über die sie mit polaren Medien und Gruppen postiv in Wechselwirkung treten können. Insbesondere sind die Oxide **MO** nicht durch Oberflächenfunktionalisierungsreagenzien, beispielsweise Chlorsilane, hydrophobiert worden.
Bei den Metalloxiden **MO** sind die Oxide der Metalle Aluminium, Titan, Zirkonium, Tantal, Wolfram, Hafnium, Zink und Zinn bevorzugt. Bei den Metalloxiden **MO** sind Aluminiumoxide wie Korund, Aluminiummischoxide mit anderen Metallen und/oder Silicium, Titanoxide, Zirkonoxide, Eisenoxide besonders bevorzugt.
Bei den Siliciumoxiden **MO** sind kolloidale Kieselsäure, pyrogene Kieselsäure, gefällte Kieselsäure, natürliche Kieselsäuren, etwa Kieselgel und Diatomeenerde und Kieselsole bevorzugt. Zudem eignen sich die Metalle **M** mit oxidierter Oberfläche, und Zeolithe (eine Auflistung geeigneter Zeolithe findet sich in: Ch. Baerlocher, W.M. Meier, D.H. Olson, Atlas of Zeolite Framework Types, 5th edition, 2001, Elsevier, Amsterdam), Silikate, Aluminate, Aluminophosphate, Titanate und Aluminiumschichtsilikate (z.B. Bentonite, Montmorillonite, Smektite, Hektorite), wobei die Partikel (P) bevorzugt eine spezifische Oberfläche von 0,1 bis 1000 m²/g, besonders bevorzugt von 1 bis 500 m²/g aufweisen (gemessen nach der BET-Methode nach DIN 66131 und 66132).

Die Partikel (P), die bevorzugt einen mittleren Durchmesser von höchstens 50 µm, besonders bevorzugt höchstens 25 µm aufweisen, können als Aggregate (Definition nach DIN 53206) und Agglomerate (Definition nach DIN 53206) vorliegen, die in Abhängigkeit von der äußeren Scherbelastung (z.B. bedingt durch die Messbedingungen) Größen von 1 bis 1000 µm aufweisen können.

Besonders bevorzugt als Partikel (P) ist pyrogene Kieselsäure, die in einer Flammenreaktion aus flüchtigen Siliziumverbindungen hergestellt wird, z.B. aus Siliziumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliziumverbindungen, wie genannt, und Kohlenwasserstoffen, z.B. in einer Wasserstoff-SauerstoffFlamme, oder auch einer Kohlenmonoxid-Sauerstoffflamme, hergestellt wird. Die Herstellung der Kieselsäure kann dabei wahlweise mit und ohne Zusatz von Wasser erfolgen, zum Beispiel im Schritt der Reinigung; bevorzugt wird kein Wasser zugesetzt.

Pyrogen hergestellte Kieselsäure oder Siliziumdioxid ist beispielsweise bekannt aus Ullmann's Enzyklopädie der Technischen Chemie 4. Auflage, Band 21, Seite 464.

Die unmodifizierte pyrogene Kieselsäure hat eine spezifische BET-Oberfläche (gemessen gemäß DIN EN ISO 9277 / DIN 66132) von 10 m²/g bis 600 m²/g, bevorzugt von 50 m²/g bis 400 m²/g.

Vorzugsweise weist die unmodifizierte pyrogene Kieselsäure eine Stampfdichte gemessen gemäß DIN EN ISO 787-11 von 10 g/l bis 500 g/l, bevorzugt von 20 g/l bis 200 g/l und besonders bevorzugt von 30 g/l bis 100 g/l auf.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, insbesondere von 1,95 bis 2,05, wobei die fraktale Dimension der Oberfläche Dₛ hierbei definiert ist als:
Partikel-Oberfläche A ist proportional zum Partikel-Radius R hoch Dₛ.
Vorzugsweise weist die Kieselsäure eine fraktale Dimension der Masse Dₘ von vorzugsweise kleiner oder gleich 2,8, bevorzugt kleiner oder gleich 2,3, besonders bevorzugt von 1,7 bis 2,1 auf, wie z.B. gegeben in F. Saint-Michel, F. Pignon, A. Magnin, J. Colloid Interface Sci. 2003, 267, 314. Die fraktale Dimension der Masse Dₘ ist hierbei definiert als: Partikel-Masse M ist proportional zum Partikel-Radius R hoch Dₘ.
Vorzugsweise weist die unmodifizierte Kieselsäure eine Dichte an Oberflächen-Silanolgruppen SiOH von kleiner als 2,5 SiOH /nm², vorzugsweise kleiner 2,1 SiOH / nm², bevorzugt von kleiner als 2 SiOH / nm², besonders bevorzugt von 1,7 bis 1,9 SiOH /nm² auf, bestimmt gemäß einer Methode wie gegeben in G.W. Sears, Anal. Chem. 28 (1956) 1981.
Es können auf nasschemisch hergestelltem Weg oder bei hoher Temperatur (> 1000 °C) hergestellte Kieselsäuren eingesetzt werden. Besonders bevorzugt sind pyrogen hergestellte Kieselsäuren. Es können auch hydrophile Kieselsäuren eingesetzt werden, die frisch hergestellt direkt aus dem Brenner kommen, zwischengelagert oder bereits handelsüblich verpackt sind.

Es können Gemische aus verschiedenen Metalloxiden oder Kieselsäuren eingesetzt werden, so z.B. Mischungen aus Metalloxiden oder Kieselsäuren unterschiedlicher BET-Oberfläche, oder Mischungen aus Metalloxiden.

Besonders bevorzugt als Partikel (P) sind Mischungen von pyrogenen Kieselsäuren mit aus Kieselalgen stammendem SiO₂, beispielsweise Kieselgel, Kieselgur, Celite® oder DiatomeenErde.

Vorzugsweise beträgt das Massenverhältnis von Polymeren (O)/Partikeln (P) höchstens 10/1, insbesondere höchstens 10/2 und vorzugsweise mindestens 10/8, insbesondere mindestens 10/6.

Gegebenenfalls können dem System aus (O) und (P) noch ein oder mehrere Zusatzstoffe zugegeben werden. Beispiele hierfür sind Lösemittel oder Filmbildehilfsmittel; Gemische aus mindestens zwei organischen Lösemitteln; Pigmentnetz- und Dispergiermittel; oberflächeneffektgebende Additive, wie zum Beispiel solche, die zur Erzielung von Texturen wie der Hammerschlagtextur oder der Orangenhaut verwendet werden; Ant'ischaummittel; Substratnetzmittel; Oberflächenverlaufsmittel; Haftvermittler; Trennmittel; weiteres organisches Polymer, das nicht identisch ist mit dem erfindungsgemäßen organischen Polymer; Tensid; hydrophober Hilfsstoff; ein nicht radikalisch polymerisierbares Polyorganosiloxan.

Die Herstellung des Systems aus Partikeln (P) und Polymeren (O) erfolgt durch Einarbeiten der Partikel (P) in eine Lösung oder Dispersion des Polymeren (O). Dies kann mit Hilfe von dem Fachmann geläufigen Methoden erfolgen, beispielsweise mit Hilfe eines Dissolvers, eines Rotor-Stator-Gerätes (z.B. Ultra-Turrax®) oder eines Speed-Mixers. Besonders bevorzugt erfolgt die Einarbeitung über einen Dissolver.

Das Beschichtungssystem wird vorzugsweise zur Herstellung von hydrophoben Beschichtungen eingesetzt. Die Applikation des so erzeugten Systems auf die zu behandelnde Oberfläche kann auf unterschiedliche Weise erfolgen. Möglich ist die Aufbringung per Rakel, per Pinsel, per Roller oder per Sprühvorrichtung. Auch eine Beschichtung durch dip-coating- oder spin-coating-Methoden ist möglich. Die einmal aufgebrachte Beschichtung wird idealerweise durch Tempern stabilisiert.

Die durch Aufbringen der Beschichtungssysteme erzeugten Beschichtungen vermitteln anti-soiling- und ultrahydrophobe Eigenschaften auf so unterschiedlichen Substraten wie Glas, Holz, Textil- und Papierfasern, Stein, Kunststoff und Metall. Beispielhafte Anwendungsgebiete sind die Beschichtung von Hauswänden, Hausdächern, Windkraftanlagen, Satellitenschüsseln, Zeltplanen, Schirmen, Cabrio-Verdecken, Markisen oder Tischdecken.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20° C.

### Beispiele

### Beispiel 1 (Herstellung eines Polymers (O)):

### Reaktionskomponenten:

| Komponente | Teile |
|---|---|
| Methoxypropylacetat | 444 |
| Butylmethacrylat | 42 |
| Styrol | 29 |
| α-Methacryloxymethylpolydimethylsiloxan (Mw ca. 1300) | 10 |
| Hydroxypropylmethacrylat | 26 |
| Methacrylsäure | 2 |
| N-(Hydroxymethyl)acrylamid | 2 |

Das Lösemittel wurde zusammen mit dem Siliconbaustein in einem Mantelreaktor mit Siedekühlung, Ankerrührer und Stickstoffeinleitungsrohr vorgelegt. Dazu wurden innerhalb von 4 Stunden bei 120°C die verbliebenen Monomere dosiert, zusammen mit 1,6 Teilen Radikalstarter tert-Butylperoxybenzoat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine transparente Lösung mit einem Festgehalt von 20%. Das Polymer besaß eine per GPC bestimmte gewichtsmittlere Molmasse von 25.000. TEM Aufnahmen des resultierenden Filmes zeigen eine komplett homogene Verteilung des Siliconbausteins an.

### Beispiel 2 (Herstellung eines Polymers (O)):

### Reaktionskomponenten:

| Komponente | Teile |
|---|---|
| Methoxypropylacetat | 324,4 |
| Butylmethacrylat | 42 |
| Styrol | 29 |
| α-Methacryloxymethylpolydimethylsiloxan (Mw ca. 3200) | 8,1 |
| Hydroxypropylmethacrylat | 26 |
| Methacryloxypropyltrimethoxysilan | 4,3 |
| N-(Hydroxymethyl)acrylamid | 2 |

Das Lösemittel wurde zusammen mit dem Siliconbaustein in einem Mantelreaktor mit Siedekühlung, Ankerrührer und Stickstoffeinleitungsrohr vorgelegt. Dazu wurden innerhalb von 4 Stunden bei 120°C die verbliebenen Monomere dosiert, zusammen mit 1,6 Teilen Radikalstarter tert-Butylperoxybenzoat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine transparente Lösung mit einem Festgehalt von 20%. Das Polymer besaß eine per GPC bestimmte gewichtsmittlere Molmasse von 40.000. TEM Aufnahmen des resultierenden Filmes zeigen eine komplett homogene Verteilung des Siliconbausteins an.

### Beispiel 3 (Herstellung eines Polymers (O)):

### Reaktionskomponenten:

| Komponente | Teile |
|---|---|
| Methoxypropylacetat | 444 |
| Butylmethacrylat | 42 |
| Styrol | 29 |
| α,ω-Divinylpolydimethylsiloxan | |
| (Mw ca. 10000) | 10 |
| Hydroxypropylmethacrylat | 26 |
| Methacrylsäure | 2 |
| N-(Hydroxymethyl)acrylamid | 2 |

Das Lösemittel wurde zusammen mit dem Siliconbaustein in einem Mantelreaktor mit Siedekühlung, Ankerrührer und Stickstoffeinleitungsrohr vorgelegt. Dazu wurden innerhalb von 4 Stunden bei 120°C die verbliebenen Monomere dosiert, zusammen mit 1,6 Teilen Radikalstarter tert-Butylperoxybenzoat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine transparente Lösung mit einem Festgehalt von 20%. Das Polymer besaß eine per GPC bestimmte gewichtsmittlere Molmasse von 25.000. TEM Aufnahmen des resultierenden Filmes zeigen ein teilweise phasensepariertes Copolymer an, das jedoch keine unpolymerisierten Siliconbestandteile mehr enthält.

### Beispiel 4 (Herstellung eines erfindungsgemäßen Polymers (O)):

### Reaktionskomponenten:

| Komponente | Teile |
|---|---|
| Methoxypropylacetat | 442,8 |
| Butylmethacrylat | 42 |
| Styrol | 29 |
| α-Methacryloxymethylpolydimethylsiloxan (Mw ca. 3200) | 11,7 |
| α,ω-Bis(Methacryloxymethyl)-polydimethylsiloxan (Mw ca. 3300) | 6 |
| Divinylbenzol | 0,6 |
| Methacryloxymethyldimethylmethoxysilan | 2,4 |
| Hydroxypropylmethacrylat | 26 |
| N-(Hydroxymethyl)acrylamid | 2 |

Das Lösemittel wurde zusammen mit den Siliconbausteinen in einem Mantelreaktor mit Siedekühlung, Ankerrührer und Stickstoffeinleitungsrohr vorgelegt. Dazu wurden innerhalb von 4 Stunden bei 120°C die verbliebenen Monomere dosiert, zusammen mit 1,6 Teilen Radikalstarter tert-Butylperoxybenzoat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine transparente Lösung mit einem Festgehalt von 20%. Das Polymer besaß eine per GPC bestimmte gewichtsmittlere Molmasse von 51.000. TEM Aufnahmen des resultierenden Filmes zeigen eine komplett homogene Verteilung des Siliconbausteins an.

### Beispiel 5 (Herstellung eines erfindungsgemäßen Polymers (O)):

### Reaktionskomponenten:

| Komponente | Teile |
|---|---|
| Methoxypropylacetat | 400,8 |
| Butylacrylat | 44 |
| Methylmethacrylat | 44 |
| α-Methacryloxymethylpolydimethylsiloxan | |
| (Mw ca. 3200) | 10,2 |
| Methacryloxypropyltrimethoxysilan | 1 |
| N-(Hydroxymethyl)acrylamid | 2 |

Das Lösemittel wurde zusammen mit dem Siliconbaustein in einem Mantelreaktor mit Siedekühlung, Ankerrührer und Stickstoffeinleitungsrohr vorgelegt. Dazu wurden innerhalb von 4 Stunden bei 120°C die verbliebenen Monomere dosiert, zusammen mit 1,6 Teilen Radikalstarter tert-Butylperoxybenzoat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine transparente Lösung mit einem Festgehalt von 20%. Das Polymer besaß eine per GPC bestimmte gewichtsmittlere Molmasse von 33.000. TEM Aufnahmen des resultierenden Filmes zeigen eine komplett homogene Verteilung des Siliconbausteins an.

### Beispiel 6 (Herstellung eines erfindungsgemäßen Polymers (O)):

### Reaktionskomponenten:

| Komponente | Teile |
|---|---|
| Isopropanol/Ethylacetat 9/1 | 400 |
| Vinylacetat | 70 |
| Itaconsäure | 5 |
| α,ω-Divinylpolydimethylsiloxan | |
| (Mw ca. 10000) | 10 |
| Vinyltrimethoxysilan | 2 |
| N-(Hydroxymethyl)acrylamid | 2 |

Das Lösemittelgemisch wurde zusammen mit dem Siliconbaustein in einem Mantelreaktor mit Siedekühlung, Ankerrührer und Stickstoffeinleitungsrohr vorgelegt. Dazu wurden innerhalb von 4 Stunden bei 120°C Vinylacetat, zusammen mit 1,6 Teilen Radikalstarter tert-Butylperoxypivalat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine tyndallisierende Lösung mit einem Festgehalt von 17%. Das Polymer besaß eine per GPC bestimmte gewichtsmittlere Molmasse von 35.000. TEM Aufnahmen des resultierenden Filmes zeigen eine Mikrophasenseparation im Mikrometerbereich an.

### Beispiel V1 (Herstellung eines nicht erfindungsgemäßen Polymers):

### Reaktionskomponenten:

| Komponente | Teile |
|---|---|
| Methoxypropylacetat | 444 |
| Butylmethacrylat | 45 |
| Styrol | 32 |
| Hydroxypropylmethacrylat | 28 |
| Methacrylsäure | 2 |
| N-(Hydroxymethyl)acrylamid | 2 |

Das Lösemittel wurde in einem Mantelreaktor mit Siedekühlung, Ankerrührer und Stickstoffeinleitungsrohr vorgelegt. Dazu wurden innerhalb von 4 Stunden bei 120°C die Monomere dosiert, zusammen mit 1,6 Teilen Radikalstarter tert-Butylperoxybenzoat. Nach erfolgter Zugabe erfolgte im Abstand von einer halben Stunde jeweils nochmals die stoßweise Zugabe von jeweils 0,3 Teilen des Radikalinitiators. Nach insgesamt 5,5 Stunden Polymerisationszeit erhielt man eine transparente Lösung mit einem Festgehalt von 20%. Das Polymer besaß eine per GPC bestimmte gewichtsmittlere Molmasse von 33.000. Das Polymer dient als Vergleichsbeispiel.

### Beispiel 7 (Herstellung eines Ultrahydrophobie vermittelnden Systems aus Polymer (O) und Partikel (P)):

In einem Dissolver vom Typ DISPERMAT® CA40-M1 der Firma Getzmann GmbH, Reichshof, Deutschland werden 2 g einer pyrogenen, hydrophilen Kieselsäure vom Typ HDK® V15 (erhältlich bei der Wacker Chemie AG, München, Deutschland) und 2 g Kieselgel 60[0,015-0,040mm] (erhältlich bei der Merck KgaA, Darmstadt, Deutschland) in 100 mL einer 10 Gew-% Lösung des Polymers aus Beispiel 1 in Methoxypropylacetat eindispergiert. Das erhaltene System wird mittels eines 90 µm-Rakels auf eine Glasplatte aufgetragen und für eine Stunde bei 140°C gelagert. Man erhält eine ultrahydrophobe Oberfläche mit einem statischen Kontaktwinkel von 147°.

### Beispiele 8-20(Herstellung von Ultrahydrophobie vermittelnden Systemen aus Polymer (O) und Partikel (P)):

In Analogie zum Beispiel 7 wurden folgende Systeme verwirklicht:

| Beispiel Nr. | Polymer (O) aus Beispiel | Partikel (P) * im Verhältnis | Verhältnis (O) / (P) | Kontaktwinkel |
|---|---|---|---|---|
| 8 | 1 | 1+2 (2/1) | 10/3 | 147° |
| 9 | 1 | 1+2 (3/1) | 10/4 | 139° |
| 10 | 1 | 1+2 (2/2) | 10/4 | 147° |
| 11 | 1 | 1+2 (2/3) | 10/5 | 144° |
| 12 | 2 | 1+2 (2/1) | 10/3 | 155° |
| 13 | 2 | 1+4 (2/1) | 10/3 | 160° |
| 14 | 3 | 1+2 (2/1) | 10/3 | 155° |
| 15 | 3 | 1+3 (2/1) | 10/3 | 152° |
| 16 | 3 | 1+4 (2/2) | 10/4 | 157° |
| 17 | 4 | 1+2 (2/2) | 10/4 | 158° |
| 18 | 4 | 1+3 (2/1) | 10/3 | 145° |
| 19 | 5 | 1+2 (2/2) | 10/4 | 154° |
| 20 | 6 | 1+2 (2/2) | 10/4 | 138° |
| VS1 | V1 | 1+2 (2/2) | 10/4 | 97° |
| VS2 | V1 | 1+3 (2/2) | 10/4 | 111° |

| | | | | |
|---|---|---|---|---|
| * 1: HDK® V15, Wacker Chemie AG, München, Deutschland 2: Kieselgel 60[0,015-0,040mm], Merck KgaA, Darmstadt, Deutschland 3: Kieselgel 60[0,040-0,063mm], Merck KgaA, Darmstadt, Deutschland 4: Celite® 545, World Minerals Inc., Santa Barbara, Kalifornien, USA | | | | |

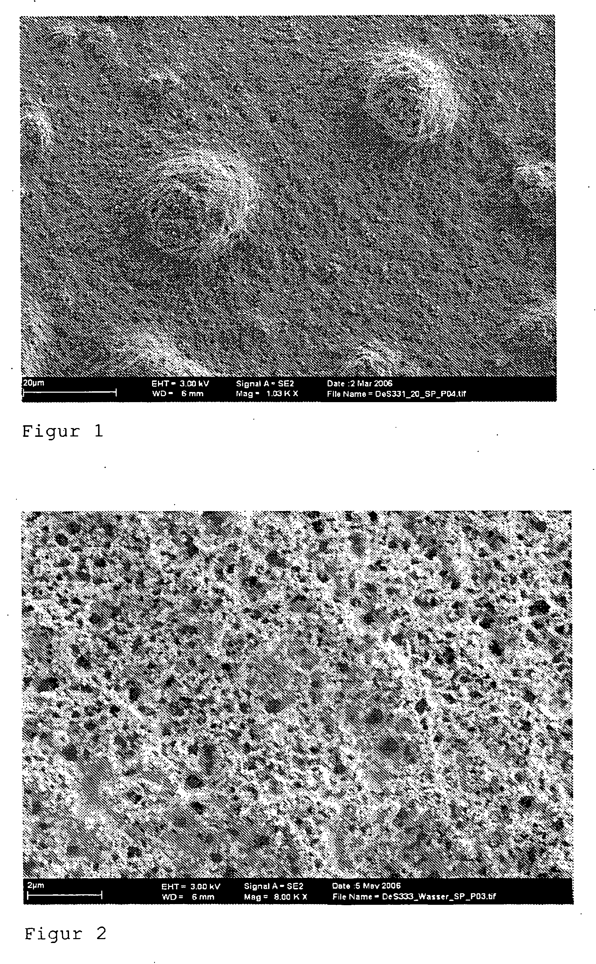

Die Figuren 1 und 2 sind REM-Aufnahmen, welche die Oberfläche eines Systems aus Beispiel 8 zeigen und die Mikro- und Nanostrukturierung deutlich machen. Vorzugs- und Rückzugswinkel aller Beispiele unterscheiden sich um weniger 10°.

Aus den Beispielen wird ersichtlich, dass die erfindungsgemäßen Systeme aus Organosiliconcopolymeren (O) und aus hydrophilen Partikeln (P) zu ultrahydrophoben Oberflächen führen. Eine im Gegensatz zum Stand der Technik beschriebene wenigstens Teilhydrophobierung der Partikel ist nicht nötig. Die Vergleichsversuche VS1 und VS2 zeigen auf, daß ein siliconfreies Polymer nicht zu den gewünschten Effekten führt.

## Patentansprüche

1. Verfahren zur Herstellung von Beschichtungssystemen, bei dem ein Organosiliconcopolymer (O), hergestellt wird durch radikalische Polymerisation mittels Methoden der freien radikalischen Polymerisation in Substanz, in organischer Lösung oder in organischer Dispersion von
A) ethylenisch ungesättigten Monomeren, die ausgewählt werden aus (Meth)acrylsäureestern, Vinylestern, Vinylaromaten, Olefinen, 1,3-Dienen und Vinylethern und
B) einfach oder mehrfach ethylenisch ungesättigten Polyorganosiloxanen und
C) gegebenenfalls ethylenisch ungesättigten Hilfsmonomeren, die ausgewählt werden aus ethylenisch ungesättigten Mono- und Dicarbonsäuren; Mono- und Diestern der Fumarsäure und Maleinsäure, maleinsäureanhydrid, ethylenisch ungesättigten Carbonsäureamiden und -nitrilen; ethylenisch ungesättigten Sulfonsäuren und deren Salzen, ethylenisch ungesättigten Monomeren mit Hydroxy- oder CO-Gruppen,
und Partikel (P) in eine Lösung oder Dispersion des Organosiliconcopolymen (O) eingearbeitet werden.

2. Verfahren nach Anspruch 1, bei dem die Monomere A) ausgewählt werden aus Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol und 1,3-Butadien.

3. Verfahren nach Anspruch 1 oder 2, bei dem die einfach oder mehrfach ethylenisch ungesättigten Polyorganosiloxane B) die allgemeine Formel [1]
(SiO_{4/2})ₖ(R¹SiO_{3/2})ₘ(R¹₂SiO_{2/2})ₚ(R¹₃SiO_{1/2})_{q} [O_{1/2}SiR³₂-L-X]ₛ[O_{1/2}H]ₜ [1]
aufweisen, wobei
L einen bivalenten gegebenenfalls substituierten aromatischen, heteroaromatischen oder aliphatischen Rest (CR⁴₂)_{b},
R¹, R³, R⁴ ein Wasserstoffatom oder einen monovalenten gegebenenfalls mit -CN, -NCO, -NR²₂, -COOH, -COOR², -PO(OR²)₂, -Halogen, -Acryl, -Epoxy, -SH, -OH oder -CONR²₂ substituierten C₁-C₂₀-Kohlenwasserstoffrest oder C₁-C₂₀-Kohlenwasserstoffoxyrest, in dem jeweils eine oder mehrere, einander nicht benachbarte Methyleneinheiten durch Gruppen -O-, -CO-, -COO-, -OCO-, oder -OCOO-, -S-, oder -NR²-ersetzt sein können und in denen eine oder mehrere, einander nicht benachbarte Methineinheiten durch Gruppen, -N=,-N=N-,oder -P= ersetzt sein können,
X einen ethylenisch ungesättigten Rest,
R² Wasserstoff oder einen monovalenten gegebenenfalls substituierten Kohlenwasserstoffrest,
b 0 oder ganzzahlige Werte,
s ganzzahlige Werte von mindestens 1,
t 0 oder ganzzahlige Werte,
k + m + p + q ganzzahlige Werte von mindestens 2 bedeuten.

4. Verfahren nach Anspruch 3, bei dem k und m den Wert 0 bedeuten und **q** den Wert 0 oder 1 bedeutet.

5. Verfahren nach Anspruch 1 bis 4, bei dem bezogen auf 100 Gewichtsteile der ethylenisch ungesättigten Monomeren A), B) und C) mindestens 50 Gewichtsteile Monomere A) eingesetzt werden.

6. Verfahren nach Anspruch 1 bis 5, bei dem bezogen auf 100 Gewichtsteile der ethylenisch ungesättigten Monomeren A), B) und C) 1 bis 50 Gewichtsteile Monomere B) eingesetzt werden.

7. Verfahren nach Anspruch 1 bis 6, bei dem die Partikel (P) ausgewählt werden aus hydrophilen Siliciumoxiden und Metalloxiden MO der Metalle Aluminium, Titan, Zirkonium, Tantal, Wolfram, Hafnium, Zink und Zinn.

8. Verfahren nach Anspruch 1 bis 7, bei dem das Massenverhältnis von Polymeren (O)/Partikeln (P) 10/1 bis 10/8 beträgt.

## Claims

1. Process for producing coating systems wherein an organosilicone copolymer (O) is prepared by free-radical polymerization by means of methods of free-radical polymerization without a solvent, in organic solution or in organic dispersion of
A) ethylenically unsaturated monomers selected from (meth)acrylic esters, vinyl esters, vinylaromatics, olefins, 1,3-dienes and vinyl ethers, and
B) mono- or polyethylenically unsaturated polyorganosiloxanes, and
C) optionally ethylenically unsaturated auxiliary monomers selected from ethylenically unsaturated mono- and dicarboxylic acids; mono- and diesters of fumaric acid and maleic acid, maleic anhydride, ethylenically unsaturated carboxylic acid amides and nitriles; ethylenically unsaturated sulfonic acids and their salts, ethylenically unsaturated monomers having hydroxyl or CO groups, and particles (P) are incorporated in a solution or dispersion of the organosilicone copolymer (O).

2. Process according to Claim 1 wherein the monomers A) are selected from vinyl acetate, vinyl esters of α-branched monocarboxylic acids having 9 to 11 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene and 1,3-butadiene.

3. Process according to Claim 1 or 2 wherein the mono- or polyethylenically unsaturated polyorganosiloxanes B) have the general formula [1]
(SiO_{4/2})ₖ(R¹SiO_{3/2})ₘ(R¹₂SiO_{2/2})ₚ(R¹₃SiO_{1/2})_{q} [O₁/₂SiR³₂-L-X]ₛ[O_{1/2}H]ₜ [1]
where
**L** represents a bivalent optionally substituted aromatic, heteroaromatic or aliphatic radical (CR⁴₂)_{b},
**R¹, R³, R**⁴ each represent a hydrogen atom or a monovalent optionally -CN-, -NCO-, -NR²₂-, -COOH-, -COOR²-, -PO(OR²)₂-, -halogen-, -acryloyl-, -epoxy-, -SH-, -OH- or -CONR²₂-substituted C₁-C₂₀ hydrocarbyl radical or C₁-C₂₀ hydrocarbyloxy radical in which in each case one or more mutually nonadjacent methylene units may be replaced by groups -O-, -CO-, -COO-, -OCO- or -OCOO-, -S-, or -NR²- and in each of which one or more mutually nonadjacent methine units may be replaced by groups -N=, -N=N-, or -P=,
**X** represents an ethylenically unsaturated radical,
**R²** represents hydrogen or a monovalent optionally substituted hydrocarbyl radical,
**b** represents 0 or integral values,
**s** represents integral values of at least 1,
**t** represents 0 or integral values,
**k + m + p + q** represent integral values of at least 2.

4. Process according to Claim 3 wherein **k** and **m** each represent 0 and **q** represents 0 or 1.

5. Process according to Claims 1 to 4 wherein at least 50 parts by weight of monomer A) are used per 100 parts by weight of the ethylenically unsaturated monomers A), B) and C).

6. Process according to Claims 1 to 5 wherein 1 to 50 parts by weight of monomer B) are used per 100 parts by weight of the ethylenically unsaturated monomers A), B) and C).

7. Process according to Claims 1 to 6 wherein the particles (P) are selected from hydrophilic silicon oxides and metal oxides **MO** of the metals aluminum, titanium, zirconium, tantalum, tungsten, hafnium, zinc and tin.

8. Process according to Claims 1 to 7 wherein the mass ratio of polymers (O)/particles (P) is in the range from 10/1 to 10/8.

## Revendications

1. Procédé pour la préparation de systèmes de revêtement, dans lequel on prépare un copolymère organosilicone (O) par polymérisation radicalaire au moyen de méthodes de la polymérisation radicalaire libre, tels quels, en solution organique ou en dispersion organique,
A) de monomères à insaturation éthylénique, qui sont choisis parmi des esters d'acide (méth)acrylique, des esters vinyliques, des composés vinylaromatiques, des oléfines, des 1,3-diènes et des éthers vinyliques et
B) de polyorganosiloxanes à une ou plusieurs insaturations éthyléniques et
C) éventuellement de monomères auxiliaires à insaturation éthylénique, qui sont choisis parmi des acides mono- et dicarboxyliques à insaturation éthylénique ; des mono- et diesters de l'acide fumarique et de l'acide maléique, l'anhydride maléique, des carboxamides et carbonitriles à insaturation éthylénique ; des acides sulfoniques à insaturation éthylénique et leurs sels, des monomères à insaturation éthylénique comportant des groupes hydroxy ou CO,
et
on incorpore des particules (P) dans une solution ou dispersion du copolymère organosilicone (O).

2. Procédé selon la revendication 1, dans lequel les monomères A) sont choisis parmi l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène et le 1,3-butadiène.

3. Procédé selon la revendication 1 ou 2, dans lequel les polyorganosiloxanes à une ou plusieurs insaturations éthyléniques B) présentent la formule générale [1]
(SiO_{4/2})ₖ(R¹SiO_{3/2})ₘ(R¹₂SiO_{2/2})ₚ(R¹₃SiO_{1/2})_{q} [O_{1/2}SiR³₂-L-X]ₛ[O_{1/2}H]ₜ [1]
dans laquelle
**L** représente un radical divalent aromatique, hétéroaromatique ou aliphatique, éventuellement substitué (CR⁴₂)_{b},
**R¹, R³, R⁴** représentent un atome d'hydrogène ou un radical hydrocarboné en C₁-C₂₀ ou radical hydrocarbyloxy en C₁-C₂₀, monovalent, éventuellement substitué par -CN, -NCO, -NR²₂, -COOH, -COOR², -PO(OR²)₂, -halogène, -acryloyle, -époxy, -SH, -OH ou -CONR²₂, dans chacun desquels une ou plusieurs unités méthylène non contiguës peuvent être remplacées par des groupes -O-, -CO-, -COO-, -OCO-, ou -OCOO-, -S-, ou -NR²- et dans lesquels une ou plusieurs unités méthine non contiguës peuvent être remplacées par des groupes -N=, -N=N-, ou -P=,
**X** représente un radical à insaturation éthylénique,
**R²** représente un atome d'hydrogène ou un radical hydrocarboné monovalent éventuellement substitué,
**b** représente 0 ou des nombres entiers,
**s** représente des nombres entiers valant au moins 1,
**t** représente 0 ou des nombres entiers,
**k + m + p + q** représentent des nombres entiers valant au moins 2.

4. Procédé selon la revendication 3, dans lequel **k** et **m** représentent la valeur 0 et **q** représente la valeur 0 ou 1.

5. Procédé selon les revendications 1 à 4, dans lequel on utilise au moins 50 parties en poids de monomères A) par rapport à 100 parties en poids des monomères à insaturation éthylénique A), B) et C).

6. Procédé selon les revendications 1 à 5, dans lequel on utilise 1 à 50 parties en poids de monomères B) par rapport à 100 parties en poids des monomères à insaturation éthylénique A), B) et C).

7. Procédé selon les revendications 1 à 6, dans lequel les particules (P) sont choisies parmi des oxydes de silicium hydrophiles et des oxydes métalliques MO des métaux aluminium, titane, zirconium, tantale, tungstène, hafnium, zinc et étain.

8. Procédé selon les revendications 1 à 7, dans lequel le rapport massique polymères (O)/particules (P) vaut de 10/1 à 10/8.
